# EUROPEAN PATENT SPECIFICATION

(11) **EP 4 005 954 B1**
(45) Date of publication and mention of the grant of the patent: **04.06.2025**
(21) Application number: 20843376.3
(22) Date of filing: 24.03.2020
(51) Int. Cl.: B65G 54/02, G01N 35/02, G01N 35/04

(54) **SPECIMEN CONVEYANCE DEVICE**
PROBENFÖRDERVORRICHTUNG
DISPOSITIF DE TRANSPORT D'ÉCHANTILLON

(30) Priority: 22.07.2019 JP 2019134328
(43) Date of publication of application: 01.06.2022
(73) Proprietor: Hitachi High-Tech Corporation, Minato-ku Tokyo 105-6409 (JP)
(72) Inventor: ONIZAWA, Kuniaki, Tokyo 105-6409 (JP); WATANABE, Hiroshi, Tokyo 105-6409 (JP)
(74) Representative: Strehl & Partner mbB
(86) International application number: PCT/JP2020/012858
(87) International publication number: WO 2021/014688

(56) References cited:
- EP-A1- 0 896 936
- EP-A1- 3 330 717
- JP-A- 2001 054 459
- JP-A- 2003 020 110
- JP-A- 2015 502 525
- JP-A- S6 169 604
- US-A1- 2016 272 432
- US-A1- 2016 274 137
- US-A1- 2017 108 522
- US-A1- 2018 106 820
- US-A1- 2019 154 717

## Description

### Technical Field

The present invention relates to a specimen transport apparatus.

### Background Art

A specimen processing system that automatically analyzes a biological sample such as blood and urine includes, in general, a specimen pre-processing apparatus that performs charging, opening of a plug, centrifugal separation, divided injection, labeling and the like of a specimen such as blood sampled for inspection, and an automatic analyzer that analyzes the specimen that is processed by the specimen pre-processing apparatus. These processing and analysis are versatile in kinds and hence, each processing or each analysis is formed of a plurality of units. The specimen is transported between the units by connecting the respective units using a transport line.

A bar code label for identifying an individual is attached to a specimen container such as a blood collecting container, and a bar code reader reads the bar code label. In such a configuration, a specimen holder that holds the specimen container has a circular horizontal section for smoothly transporting the specimen holder and hence, it is difficult to identify the position of the bar code label in a circumferential direction. Accordingly, reading of the bar code label is performed by rotating the specimen holder or the specimen container using a dedicated rotating apparatus.

For example, Patent Literature 1 discloses "A bar code scanning unit scans a bar code label during the rotational movement of the rotating apparatus." (paragraph 0049)

### Citation List

### Patent Literature

Patent Literature 1
Japanese Patent Laid-Open No. 2018-96981
Further, US2016274137A1 discloses a specimen transport apparatus from which the pre-characterising part of claim 1 starts out. Related art is disclosed in US2019154717A1, EP3330717A1 and US2017108522A1.

### Summary of Invention

### Technical Problem

However, as described in Patent Literature 1, in a case where the rotating apparatus is additionally provided on the transport line and the specimen holder is rotated each time scanning is performed, the apparatus becomes large-sized or processing ability is lowered.

It is an object of the present invention to provide a specimen transport apparatus capable of reading a specimen identifier while suppressing large-sizing of the apparatus and lowering of processing ability of the apparatus.

### Solution to Problem

To overcome the above-mentioned drawbacks, the present invention provides a specimen transport apparatus as defined in the appended claim.

### Advantageous Effects of Invention

According to the one aspect of the present invention, it is possible to provide a specimen transport apparatus capable of reading a specimen identifier while suppressing large sizing of the apparatus and lowering of processing ability of the apparatus.

### Brief Description of Drawings

Fig. 1 is a schematic view illustrating a specimen transport apparatus according to First Embodiment of the present invention.
Fig. 2 is a schematic view illustrating an arrangement of a magnetic body provided in a specimen holder according to First Embodiment of the present invention.
Fig. 3 is a schematic view of a horizontal section showing the specimen holder according to First Embodiment of the present invention and surrounding electromagnets.
Fig. 4 is a schematic view illustrating a specimen transport apparatus according to Second Embodiment of the present invention.
Fig. 5 is a schematic view illustrating a specimen transport apparatus according to Third Embodiment of the present invention.

### Description of Embodiment

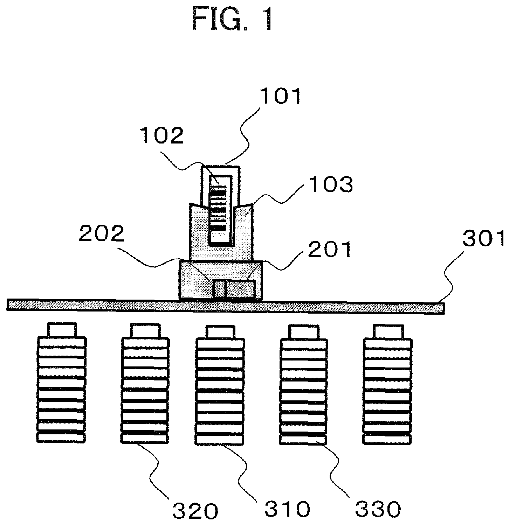

Specimen transport apparatuses according to embodiments of the present invention are described in detail with reference to Fig. 1 to Fig. 5.

### First Embodiment

Fig. 1 is a schematics view illustrating a specimen transport apparatus according to an embodiment. The specimen transport apparatus according to this embodiment is applicable to a transport line that is connected between a pre-processing apparatus and an analyzer, a transport line that is connected between respective units in a pre-processing apparatus and the like. In such a configuration, the pre-processing apparatus is an apparatus that performs pre-processing such as a centrifugal operation, opening of a plug, divided injection with respect to a biological sample (specimen) that is sampled from a patient to a blood collecting container. The analyzer is an apparatus that performs analytical processing of a specimen to which the pre-processing is already applied.

As shown in Fig. 1, the specimen transport apparatus according to the embodiment includes: a specimen holder 103 that holds a specimen container 101 and that is provided with a transport magnetic body 201; and a plurality of electromagnets 310, 320, 330 that are arranged under a transport surface 301 to transport the specimen holder 103 by attracting or repelling the transport magnetic body 201. Each of electromagnets 310, 320, 330 is formed of a core and a wiring wound around an outer periphery of the core. When an electric current is supplied to the wiring, a magnetic field is generated on the transport surface 301.

A bar code label 102 is attached to a side surface of the specimen container 101. A bar code that forms an identifier in which specimen identification information is contained as a code is printed on the bar code label 102. An object to be attached to the specimen container 101 is not limited to a bar code, and other identifiers such as a two-dimensional code or RFID may be attached to the specimen container 101. The specimen holder 103 is configured such that one specimen container 101 can be mounted on the specimen holder 103, and the specimen holder 103 has a plurality of magnetic bodies. Although a permanent magnet such as neodymium or ferrite is desirable as a magnetic body, other magnets or soft magnetic bodies may also be used.

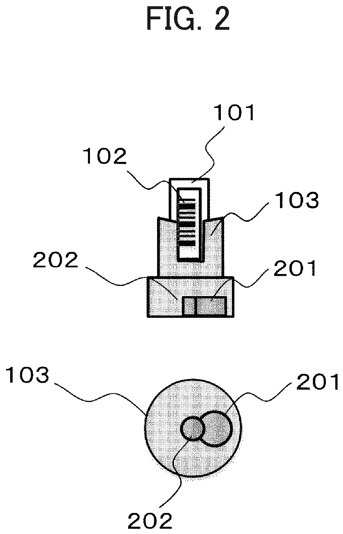

Fig. 2 is a schematic view illustrating an arrangement of the magnetic body provided in the specimen holder 103. As shown in Fig. 2, the specimen holder 103 according to the embodiment has a circular horizontal section, and the transport magnetic body (magnet) 201 and a positioning magnetic body (magnet) 202 are mounted on the bottom surface of the specimen holder 103. A magnetic flux center of the transport magnetic body 201 is eccentric with respect to a center of the specimen holder 103, that is, a position of a central axis of the specimen container 101. On the other hand, a magnetic flux center of the positioning magnetic body 202 approximately agrees with the position of the central axis of the specimen container 101. In this embodiment, the center of the transport magnetic body 201 is spatially displaced from the central axis of the specimen container 101. However, even when the center of the transport magnetic body 201 spatially agrees with the central axis of the specimen container 101, there is no problem provided that the position of the magnetic flux center of the transport magnetic body 201 is located at the position magnetically displaced from the central axis of the specimen container 101.

First, an operation for transporting the specimen holder 103 to a predetermined position is described. For example, in a case where the specimen holder 103 is disposed on the electromagnet 320, the specimen transport apparatus supplies an electric current to the wiring of the electromagnet 310 disposed adjacently to the electromagnet 320 toward the predetermined position, and generates a magnetic field that attracts the transport magnetic body 201 on the transport surface 301. Then, when the specimen holder 103 reaches the electromagnet 310, the specimen transport apparatus further supplies an electric current to a wiring of the neighboring electromagnet 330 disposed adjacently to the electromagnet 320, and generates a magnetic field that attracts the transport magnetic body 201. By repeating such steps, the specimen holder 103 can be transported to the predetermined position. A propulsion force of the specimen holder 103 may be obtained by using a repelling force of an electromagnet disposed at a transport source in addition to an attraction force of the electromagnet disposed at a transport destination.

In this manner, in transporting the specimen holder 103, the transport magnetic body 201 is attracted or repelled by a magnetic field on the transport surface 301 so that the transport magnetic body 201 is constantly located at the position closer to the transport destination than the center of the specimen holder 103. Accordingly, even when the specimen holder 103 has a circular horizontal section, a side surface of the specimen holder 103 on which the transport magnetic body 201 is positioned can be constantly positioned in a direction of a head of the transport direction. That is, specimen it is possible to set the direction of the specimen holder 103 at the time of finishing the transportation to the fixed direction.

For example, in a case where a bar code reader (identifier reading apparatus) not illustrated in the drawing is located at a position further ahead in a transporting direction, the specimen container 101 is arranged in advance with respect to the specimen holder 103 such that the bar code label 102 is positioned on a side where the transport magnetic body 201 is disposed. As a result, when the transportation of the specimen holder 103 to the predetermined position is completed, a brought state is brought about where a surface of the specimen container 101 to which the bar code label 102 is attached is directed toward the bar code reader. Accordingly, even when a rotating apparatus is additionally provided so as to rotate the specimen holder 103 or the like, a bar code is readable and hence, large sizing of the apparatus and lowering of processing ability can be suppressed.

The bar code reader reads specimen information that the bar code has by irradiating light from the light source to the bar code label 102 attached to the specimen container 101 and detects information on the light obtained from the bar code. However, a reading method is not particularly limited. For example, both a CCD method and a laser method can also be used.

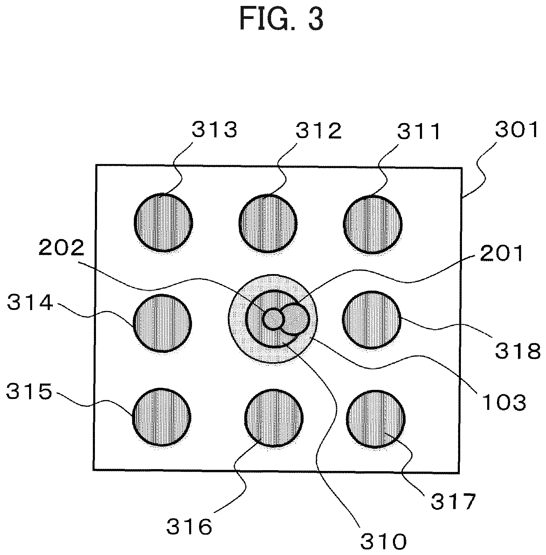

Next, the operation of the specimen transport apparatus when the specimen holder 103 is rotated is described with reference to Fig. 3. Fig. 3 is a schematic view of a horizontal section illustrating the specimen holder 103 and the electromagnets around the specimen holder 103. In this embodiment, the case is estimated where the specimen holder 103 is disposed on the electromagnet 310.

First, when an electric current is supplied to a wiring of the electromagnet 310 and the positioning magnetic body 202 is attracted by a generated magnetic field, the specimen holder 103 is fixed such that the center of the specimen holder 103 is positioned in the vicinity of a position right above the electromagnet 310. In such a state, when an electric current is supplied also to a wiring of the electromagnet 311 that is one of the electromagnets disposed adjacently to the electromagnet 310 so that an attraction force is applied to the transport magnetic body 201, a surface of the specimen holder 103 on which the transport magnetic body 201 is mounted faces toward a side where the electromagnet 311 is disposed in a state where the specimen holder 103 maintains its center position. Further, when an electric current is supplied to a wiring of the electromagnet 312 that is one of the electromagnets disposed adjacently to the electromagnets 310, 311 while maintaining the attraction of the positioning magnetic body 202 by the electromagnet 310, in the same manner, the surface of the specimen holder 103 on which the transport magnetic body 201 is mounted faces toward a side where the electromagnet 312 is disposed. Then, substantially the same operation as described above is sequentially repeated with respect to the electromagnets 313, 314, 315, 316, 317, and 318 so that the specimen holder 103 is rotated on the electromagnet 310.

As described above, in this embodiment, among the plurality of electromagnets, the specimen holder 103 can be rotated by sequentially attracting the transport magnetic body 201 with the second electromagnets located around the first electromagnet while attracting the positioning magnetic body 202 with the first electromagnet located directly under the positioning magnetic body 202. That is, the specimen holder 103 can be rotated even when a rotating apparatus is not additionally provided and hence, large-sizing of the apparatus can be suppressed. The second electromagnets are not limited to the magnets located at positions adjacently to the first electromagnet, and the electromagnets located at positions remote from the first electromagnet may also be used. It may be possible to rotate the specimen holder 103 using a force that repels against the transport magnetic body 201 besides a force that attracts the transport magnetic body 201. However, the direction that a repelling force acts is uncertain and hence, it is desirable to use an attracting force as a main force.

The transport magnetic body 201 and the positioning magnetic body 202 may be formed of magnetic bodies having different magnetic forces from each other or magnetic bodies having different polarities from each other. However, in the case where the transport magnetic body 201 is used as a main force and the positioning magnetic body 202 is used as an auxiliary force, a transport efficiency is enhanced. Accordingly, it is desirable that a magnetic force of the transport magnetic body 201 be made higher than a magnetic force of the positioning magnetic body 202. As a method of increasing a magnetic force of the transport magnetic body 201, large-sizing of the shape of the transport magnetic body 201, or the use of a magnetic body having high flux density as the transport magnetic body 201 is considered.

### Second Embodiment

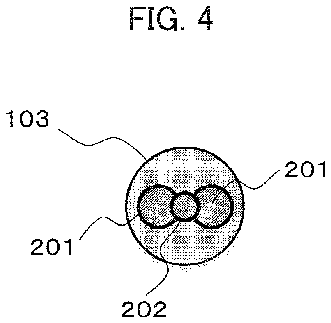

Fig. 4 is a schematic view illustrating a specimen transport apparatus according to Second Embodiment. Unlike First Embodiment, in this embodiment, the specimen transport apparatus is provided with a plurality of transport magnetic bodies 201. Specifically, two transport magnetic bodies 201 are provided at positions symmetrical with respect to a positioning magnetic body 202. That is, two transport magnetic bodies 201 are disposed at positions opposite to each other with the positioning magnetic body 202 sandwiched therebetween.

In this embodiment, in rotating a specimen holder 103, an electric current is supplied to wirings of two electromagnets disposed at positions opposite to each other with the electromagnet located directly under the positioning magnetic body 202 of the specimen holder 103 sandwiched therebetween. That is, as a force that rotates the specimen holder 103, attraction forces generated by two transport magnetic bodies 201 are used. Accordingly, a rotational operation of the specimen holder 103 can be made stable. Further, these two attraction forces are applied in the directions opposite to each other with respect to the center of the specimen holder 103 and hence, forces in the radial direction cancel each other whereby it is possible to prevent the positioning magnetic body 202 from being transported due to a force that exceeds a force of the positioning magnetic body 202 for maintaining the center of the specimen holder 103.

### Third Embodiment

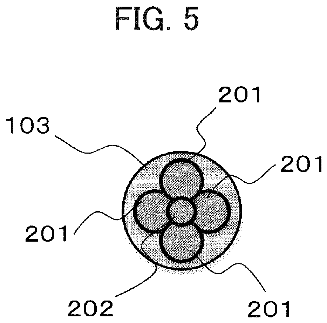

Fig. 5 is a schematic view illustrating a specimen transport apparatus according to Third Embodiment. Also in this embodiment, in the same manner as Second embodiment, the specimen transport apparatus is provided with a plurality of transport magnetic bodies 201. However, the number of transport magnetic bodies 201 is set to 4. According to this embodiment, it is possible to make a rotational operation of a specimen holder 103 more stable.

### List of Reference Signs

- 101: Specimen container
- 102: Bar code label
- 103: Specimen holder
- 201: Transport magnetic body
- 202: Positioning magnetic body
- 301: Transport surface
- 310 to 318: Electromagnet

## Claims

1. A specimen transport apparatus comprising:
a specimen holder (103) that holds a specimen container (101) and that is provided with a transport magnetic body (201) and a positioning magnetic body (202); and
a plurality of electromagnets (310~330) that are arranged under a transport surface (301) to transport the specimen holder (103) by attracting or repelling the transport magnetic body (201),
**characterized in that**
a specimen identifier (102) is attached to the specimen container (101), and the specimen holder (103) has a horizontal cross section that is circular, and
the transport magnetic body (201) has a higher magnetic flux density than the positioning magnetic body (202) and a magnetic flux center of the transport magnetic body (201) is eccentric with respect to a central axis of the specimen container (101) held by the specimen holder (103) whereas a magnetic flux center of the positioning magnetic body (202) is located at a position of the central axis of the specimen container (101) held by the specimen holder (103), wherein the specimen transport apparatus is configured to rotate the specimen holder (103) while attracting the positioning magnetic body (202) with a first electromagnet (310) located directly under the positioning magnetic body (202), of the plurality of the electromagnets (310-330), by sequentially attracting or repelling the transport magnetic body (201) with second electromagnets (311~318) located around the first electromagnet (310).

## Patentansprüche

1. Probentransportvorrichtung, umfassend:
einen Probenhalter (103), der einen Probenbehälter (101) hält und mit einem Transportmagnetkörper (201) und einem Positionierungsmagnetkörper (202) versehen ist; und
mehrere Elektromagnete (310-330), die unter einer Transportfläche (301) angeordnet sind, um den Probenhalter (103) durch Anziehen oder Abstoßen des Transportmagnetkörpers (201) zu transportieren,
**gekennzeichnet dadurch, dass**
ein Probenidentifikation (102) am Probenbehälter (101) angebracht ist und der Probenhalter (103) einen horizontalen Querschnitt aufweist, der kreisförmig ist, und
der Transportmagnetkörper (201) eine höhere magnetische Flussdichte als der Positionierungsmagnetkörper (202) aufweist und ein Magnetflussmittelpunkt des Transportmagnetkörpers (201) in Bezug auf eine Mittelachse des Probenbehälters (101), der vom Probenhalter (103) gehalten wird, exzentrisch ist, während sich ein Magnetflussmittelpunkt des Positionierungsmagnetkörpers (202) an einer Position der Mittelachse des Probenbehälters (101), der vom Probenhalter (103) gehalten wird, befindet, wobei die Probentransportvorrichtung dazu eingerichtet ist, den Probenhalter (103) zu drehen, während der Positionierungsmagnetkörper (202) mit einem ersten Elektromagneten (310) der mehreren Elektromagneten (310-330) angezogen wird, der sich direkt unter dem Positionierungsmagnetkörper (202) befindet, indem der Transportmagnetkörper (201) durch zweite Elektromagneten (311~318), die um den ersten Elektromagneten (310) herum angeordnet sind, aufeinanderfolgend angezogen oder abgestoßen wird.

## Revendications

1. Appareil de transport d'échantillons comprenant :
un porte-échantillon (103) qui contient un récipient (101) pour échantillon et qui est prévu avec un corps magnétique (201) de transport et un corps magnétique (202) de positionnement ; et
une pluralité d'électroaimants (310-330) qui sont agencés sous une surface (301) de transport pour transporter le porte-échantillon (103) en attirant ou en repoussant le corps magnétique (201) de transport,
**caractérisé en ce que**
un identifiant (102) d'échantillon est fixé au récipient (101) pour échantillon, et le porte-échantillon (103) a une coupe transversale horizontale qui est circulaire, et
le corps magnétique (201) de transport a une densité de flux magnétique plus élevée que le corps magnétique (202) de positionnement et un centre de flux magnétique du corps magnétique (201) de transport est excentrique par rapport à un axe central du récipient (101) pour échantillon contenu par le porte-échantillon (103) tandis qu'un centre de flux magnétique du corps magnétique (202) de positionnement est situé à une position de l'axe central du récipient (101) pour échantillon contenu par le porte-échantillon (103), dans lequel l'appareil de transport d'échantillons est configuré pour faire tourner le porte-échantillon (103) tout en attirant le corps magnétique (202) de positionnement avec un premier électroaimant (310) situé directement sous le corps magnétique (202) de positionnement, parmi la pluralité des électroaimants (310-330), en attirant ou en repoussant séquentiellement le corps magnétique (201) de transport avec des deuxièmes électroaimants (311-318) situés autour du premier électroaimant (310).
